# FASCICULE DE BREVET EUROPEEN

(11) **EP 0 673 813 B1**
(45) Date de publication et mention de la délivrance du brevet: **28.01.1998**
(21) Numéro de dépôt: 95104005.4
(22) Date de dépôt: 18.03.1995
(51) Int. Cl.: B60S 1/34

(54) **Essuie-glace de véhicule automobile, comportant des moyens d'orientation de la tête d'entraînement**
Scheibenwischer für Kraftfahrzeuge mit Befestigungsteil-Orientierungsmittel
Windscreen wiper for motor vehicles, having orientation means for the mounting part

(30) Priorité: 23.03.1994 FR 9403413
(43) Date de publication de la demande: 27.09.1995
(73) Titulaire: PAUL JOURNEE S.A., F-60240 Reilly (FR)
(72) Inventeur: Journee, Maurice, F-60240 Reilly (FR); Favre, Philipp, F-76120 Quevilly (FR)
(74) Mandataire: Lemaire, Marc

(56) Documents cités:
- EP-A- 0 604 324
- DE-A- 4 224 861
- FR-A- 2 679 304
- GB-A- 875 387

## Description

La présente invention concerne un essuie-glace de véhicule automobile.

L'invention concerne plus particulièrement un essuie-glace du type comportant un bras d'essuie-glace dont la tête d'entraînement est fixée sur la portion d'extrémité d'un arbre moteur appartenant à une unité d'entraînement de l'essuie-glace.

Selon la technique la plus couramment utilisée pour la fixation du bras d'essuie-glace sur l'arbre moteur et l'entraînement en rotation du bras d'essuie-glace par l'arbre moteur, la portion d'extrémité de l'arbre moteur comporte un tronçon tronconique qui est reçu dans un perçage conique complémentaire débouchant associée à la tête d'entraînement et qui se prolonge par un tronçon d'extrémité fileté sur lequel est vissé un écrou de serrage dont la face radiale de serrage coopère avec une portion en vis-à-vis de la face supérieure de la tête d'entraînement.

Selon un agencement décrit par exemple dans le document FR-A-2 679 304, l'axe du perçage tronconique est perpendiculaire aux faces planes supérieure et inférieure de la tête d'entraînement du bras d'essuie-glace de manière que, en position montée et serrée, ces deux faces s'étendent dans des plans perpendiculaires à l'axe de rotation de l'arbre moteur.

Cet agencement géométrique détermine l'orientation générale du bras d'essuie-glace, du balai d'essuie-glace qui est articulé à l'extrémité du bras et de la lame d'essuyage portée par le balai d'essuie-glace, par rapport à la structure du véhicule et donc par rapport à la surface à essuyer telle que le pare-brise du véhicule.

Pour certaines applications, tout en standardisant au maximum les différents composants des essuie-glaces, il est souhaitable de disposer d'une faculté de réglage de l'orientation du bras d'essuie-glace, et donc de la lame d'essuyage, et ceci éventuellement selon plusieurs axes d'orientation. Le document DE-A-42 24 861 décrit une fixation d'essuie-glace permettant un ajustement du bras hors du plan perpendiculaire à l'axe de l'arbre moteur à l'aide d'une paire de rondelles formant cales. A chaque position du bras correspond une paire de cales définie.

Dans le même but, l'invention propose un essuie-glace de véhicule automobile du type comportant un bras d'essuie-glace dont la tête d'entraînement est fixée sur la portion d'extrémité d'un arbre moteur appartenant à une unité d'entraînement de l'essuie-glace, et du type dans lequel la portion d'extrémité de l'arbre moteur comporte un tronçon tronconique qui est reçu dans un perçage complémentaire débouchant associé à la tête d'entraînement et qui se prolonge par un tronçon d'extrémité sur lequel est vissé un écrou de serrage dont la face radiale de serrage coopère avec une portion en vis-à-vis de la face supérieure de la tête d'entraînement, la tête d'entraînement comportant une première rondelle d'orientation dans laquelle est formé le perçage tronconique et dont une face comporte une série de crans qui coopèrent avec les crans d'une première surface d'appui crantée complémentaire solidaire du corps de la tête d'entraînement dont un trou oblong débouchant est traversée par la portion d'extrémité de l'arbre moteur, de façon à permettre un positionnement du corps par rapport à l'arbre moteur, selon le document GB-A-875 387
caractérisé en ce que ladite première surface d'appui complémentaire est formée en vis-à-vis de la face de la première rondelle d'orientation sur le corps de la tête d'entraînement, la forme oblongue du trou et la disposition desdits crans permettant ledit positionnement du corps de la tête d'entraînement autour d'un premier axe de positionnement sensiblement perpendiculaire à l'axe du moteur.

Selon d'autres caractéristiques de l'invention :
- les crans sont formés sur une surface sphérique de manière à permettre une orientation du corps de la tête d'entraînement par rapport à l'axe de l'arbre moteur autour d'un axe parallèle à la direction des crans et autour d'un axe perpendiculaire à la direction des crans, l'un de ces deux axes constituant ledit premier axe de positionnement.
- la face crantée de la rondelle d'orientation comporte deux séries perpendiculaires de crans parallèles;
- la surface d'appui est formée dans la face inférieure du corps de la tête d'entraînement ;
- la face crantée de la première rondelle d'orientation est sphérique ainsi que la première surface d'appui complémentaire qui est formée dans la face inférieure du corps de la tête d'entraînement, et en ce qu'il comporte en outre une seconde rondelle d'orientation qui est interposée entre l'écrou de serrage et la face supérieure du corps de la tête d'entraînement et dont une face sphérique comporte une série de crans parallèles qui coopèrent avec une seconde surface crantée complémentaire sphérique formée dans la face supérieure du corps de la tête d'entraînement de manière à permettre une orientation du corps de la tête d'entraînement par rapport à l'axe de l'arbre moteur par pivotement du corps de la tête d'entraînement autour d'un second axe d'articulation.
- les crans parallèles de la première surface crantée du corps de la tête d'entraînement sont perpendiculaires à ceux de la seconde surface crantée.
- une cale de blocage est interposée entre la face radiale de serrage de l'écrou et la portion en vis-à-vis de la face supérieure du corps de la tête d'entraînement et la face inférieure de la cale de blocage est une face courbe dont la courbure correspond à celle de la face crantée de la rondelle d'orientation ;
- les crans sont parallèles et sont formés sur une surface sphérique de manière à permettre une orientation du corps de la tête d'entraînement par rapport à l'axe de l'arbre moteur autour d'un axe parallèle à la direction des crans et autour d'un axe perpendiculaire à la direction des crans ;
- la face crantée de la rondelle d'orientation comporte deux séries perpendiculaires de crans parallèles;
- la surface d'appui est formée dans la face inférieure du corps de la tête d'entraînement ;
- une seconde rondelle d'orientation est interposée entre l'écrou de serrage et la face supérieure du corps de la tête d'entraînement et dont une face comporte une série de crans parallèles qui coopèrent avec une surface crantée complémentaire formée dans la face supérieure du corps de la tête d'entraînement de manière à permettre une orientation du corps de la tête d'entraînement par rapport à l'axe de l'arbre moteur par pivotement du corps de la tête d'entraînement autour d'un second axe d'orientation ;
- les crans parallèles des deux surfaces crantées du corps de la tête d'entraînement sont perpendiculaires entre eux ;
- une cale de blocage est interposée entre la face radiale de serrage de l'écrou et la portion en vis-à-vis de la face supérieure du corps de la tête d'entraînement et la face inférieure de la cale de blocage est une face courbe dont la courbure correspond à celle de la face crantée de la rondelle d'orientation ;
- la face inférieure de la cale de blocage est sphérique.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en perspective éclatée d'un essuie-glace de véhicule automobile réalisé conformément aux enseignements de l'invention ; et
- la figure 2 est une vue similaire à celle de la figure 1 qui illustre un second mode de réalisation d'un essuie-glace conforme aux enseignements de l'invention.

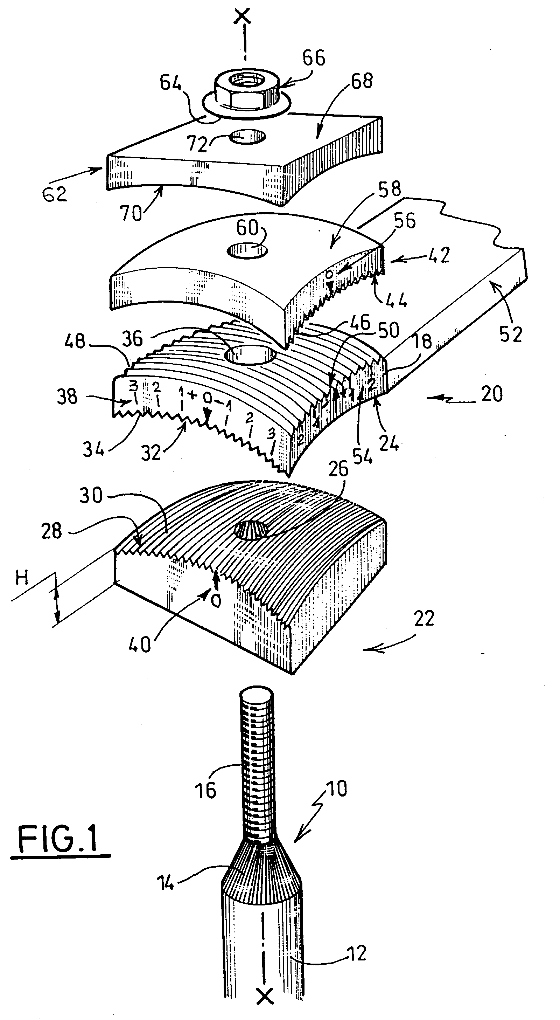

On reconnaît sur la figure 1 un arbre moteur 10 d'axe de rotation X-X dont la portion d'extrémité libre 12 comporte successivement un tronçon tronconique cranté d'entraînement en rotation 14 et un tronçon d'extrémité fileté 16.

On reconnaît également sur la figure 1 le corps 18 d'une tête d'entraînement 20 qui est prévue pour recevoir, de manière articulée, un bras d'essuie-glace (non représenté) qui est prévu pour pivoter par rapport à la tête d'entraînement 20 autour d'un axe de pivotement sensiblement perpendiculaire à l'axe X-X de l'arbre moteur 10.

Une première rondelle d'orientation et d'entraînement 22 est interposée entre la portion d'extrémité 12 de l'arbre moteur 10 et la face inférieure 24 du corps 18 de la tête d'entraînement 20.

La première rondelle d'orientation 22 comporte un perçage central cranté et tronconique 26 qui est prévu pour coopérer avec le tronçon tronconique cranté 14 de l'arbre moteur 10 de manière à assurer l'entraînement en rotation de la rondelle 22 par l'arbre moteur 10.

La face supérieure 28 de la première rondelle d'orientation 22 est une face sphérique dont le centre est situé sur l'axe du perçage tronconique 26 et qui comporte une série de crans parallèles 30.

De manière complémentaire, la face inférieure 24 du corps 18 de la tête d'entraînement 20 comporte une surface d'appui crantée 32 qui est également une portion de surface sphérique munie d'une série de crans parallèles 34.

Le corps 18 de la tête d'entraînement 20 est percé en son centre par un trou débouchant oblong 36 qui permet le passage avec jeu, du tronçon d'extrémité fileté 16 de l'arbre moteur 10.

On comprend donc aisément qu'il est possible de positionner le corps 18 de la tête d'entraînement 20 par rapport à la première rondelle d'orientation 22, et donc par rapport à l'axe X-X de l'arbre moteur dans différentes positions par pivotement, pas à pas, du corps 18 autour d'un axe géométrique parallèle aux crans 30 et 34 et qui est sensiblement perpendiculaire à l'axe de l'arbre moteur, la forme oblongue du trou 36 permettant un tel déplacement relatif du corps 18 de la tête d'entraînement 20 par rapport à la première rondelle d'orientation 22 et par rapport à la portion d'extrémité 12 de l'arbre moteur 10.

La position relative de ces deux composants peut être repérée à l'aide de graduations et de repères 38 et 40 qui permettent de déterminer la valeur de l'angle d'inclinaison de la tête d'entraînement 20 par rapport à l'axe X-X qui est appelé angle d'essuyage de l'essuie-glace.

Conformément à un autre aspect de l'invention, l'essuie-glace comporte une seconde rondelle d'orientation 42 qui est disposée au-dessus de la face supérieure 52 du corps 18 de la tête d'entraînement 20.

La face inférieure 44 de la seconde rondelle d'orientation 42 est une face sphérique qui comporte une série de crans parallèles 46 qui sont susceptibles de coopérer avec une série de crans complémentaires 48 formés dans une portion de surface sphérique crantée complémentaire 50 formée dans la face supérieure 52 du corps 18 de la tête d'entraînement 20.

La coopération des crans 46 et 48 permet de faire varier l'orientation du corps 18 de la tête d'entraînement 20 par rapport à l'axe X-X autour d'un second axe d'orientation parallèle à la direction commune aux crans 46 et 48 de manière à régler l'angle d'azimuth de l'essuie-glace.

Ce second axe d'orientation est perpendiculaire au premier axe d'orientation du fait de l'agencement perpendiculaire des crans 48 par rapport aux crans 34.

Des graduations et des repères 54 et 56 permettent de régler de manière précise l'angle d'azimuth de la tête d'entraînement.

La conception selon l'invention permet également de faire varier l'altitude de corps 18 de la tête d'entraînement 20 par rapport à la structure fixe du véhicule qui reçoit à rotation l'arbre moteur 10, en choisissant la hauteur H de la première rondelle d'orientation 22.

La face supérieure 58 de la seconde rondelle d'orientation 42 est une portion de surface sphérique percée en son centre par un trou 60 laissant le passage, avec jeu, au tronçon d'extrémité fileté 16 de l'arbre moteur 10.

Une cale de blocage 62 est interposée entre la face radiale inférieure de serrage 64 d'un écrou de serrage 66 prévu pour être vissé sur l'extrémité filetée 16 de l'arbre moteur 12, et la seconde rondelle d'orientation 42.

La face supérieure 68 de la cale de blocage 62 est une portion de surface plane tandis que sa face inférieure 70 est une portion de surface sphérique complémentaire de la portion de surface sphérique supérieure 58 de la seconde rondelle d'orientation 42.

Enfin, la cale de blocage 62 est percée en son centre d'un trou 72 permettant le passage, sans jeu, du tronçon d'extrémité fileté 16 de l'arbre moteur 12.

Après avoir réglé les différents angles d'orientation de la tête d'entraînement 20 par rapport à l'axe X-X, l'opérateur n'a plus qu'à serrer l'écrou 66 qui bloque les différents composants dans leurs positions respectives préalablement réglées.

L'entraînement en rotation de la tête d'entraînement 20 est assuré par les crans 14 qui coopèrent avec le perçage tronconique cranté 26 de la première rondelle d'orientation 22 et par les deux séries de crans 30, 34 et 46, 48 qui sont maintenus en prise par l'écrou de serrage 66.

Dans la variante de réalisation illustrée sur la figure 2, il n'est prévu qu'une seule rondelle d'orientation 22 dont la face supérieure 28 est sphérique et comporte deux séries de crans parallèles 30 et 48, perpendiculaires entre elles et qui coopèrent avec deux séries de crans parallèles 34 et 44, perpendiculaires entre elles, qui sont formées dans une portion de surface sphérique inférieure 32 du corps 18 de la tête d'entraînement 20.

Par contre, la portion de surface supérieure 50 du corps 18 de la tête d'entraînement 20 est une portion de surface sphérique lisse qui est complémentaire de la portion de surface inférieure sphérique 70 de la rondelle de blocage 62.

Comme dans le mode de réalisation précédent, cette conception permet le réglage de l'angle d'essuyage, de l'angle d'azimuth, et de la hauteur de la tête d'entraînement par rapport à la structure du véhicule.

## Revendications

1. Essuie-glace de véhicule automobile du type comportant un bras d'essuie-glace dont la tête d'entraînement (20) est fixée sur la portion d'extrémité (12) d'un arbre moteur (10) appartenant à une unité d'entraînement de l'essuie-glace, et du type dans lequel la portion d'extrémité (12) de l'arbre moteur (10) comporte un tronçon tronconique (14) qui est reçu dans un perçage complémentaire débouchant (26) associé à la tête d'entraînement (20) et qui se prolonge par un tronçon d'extrémité (16) sur lequel est vissé un écrou de serrage (66) dont la face radiale de serrage (64) coopère avec une portion en vis-à-vis de la face supérieure (52) de la tête d'entraînement (20), la tête d'entraînement comportant une première rondelle d'orientation (22) dans laquelle est formé le perçage tronconique (26) et dont une face (28) comporte une série de crans (30) qui coopèrent avec les crans (34) d'une première surface d'appui crantée complémentaire (32) solidaire du corps (18) de la tête d'entraînement (20) dont un trou oblong (36) débouchant est traversée par la portion d'extrémité (12) de l'arbre moteur (10), de façon à permettre un positionnement du corps (18) par rapport à l'arbre moteur,
caractérisé en ce que ladite première surface d'appui complémentaire (32) est formée en vis-à-vis de la face (28) de la première rondelle d'orientation (22) sur le corps (18) de la tête d'entraînement (20), la forme oblongue du trou (36) et la disposition desdits crans (30, 34) permettant ledit positionnement du corps (18) de la tête d'entraînement (20) autour d'un premier axe de positionnement sensiblement perpendiculaire à l'axe (X-X) du moteur.

2. Essuie-glace selon la revendication 1, caractérisé en ce que les crans (30, 34) sont formés sur une face sphérique de manière à permettre une orientation du corps (18) de la tête d'entraînement (20) par rapport à l'axe (X-X) de l'arbre moteur (10) autour d'un axe parallèle à la direction des crans et autour d'un axe perpendiculaire à la direction des crans, l'un de ces deux axes constituant ledit premier axe de positionnement.

3. Essuie-glace selon la revendication 2, caractérisé en ce que la face crantée (28) de la rondelle d'orientation (22) comporte deux séries perpendiculaires de crans parallèles (30, 48).

4. Essuie-glace selon l'une quelconque des revendications précédentes, caractérisé en ce que la surface d'appui (32) est formée dans la face inférieure (24) du corps (18) de la tête d'entraînement (20).

5. Essuie-glace selon la revendication 1 caractérisé en ce que la face crantée (28) de la première rondelle d'orientation est sphérique ainsi que la première surface d'appui complémentaire (32) qui est formée dans la face inférieure du corps (18) de la tête d'entraînement (20), et en ce qu'il comporte en outre une seconde rondelle d'orientation (42) qui est interposée entre l'écrou (66) de serrage et la face supérieure (52) du corps (18) de la tête d'entraînement (20) et dont une face (44) sphérique comporte une série de crans parallèles (46) qui coopèrent avec une seconde surface crantée complémentaire sphérique (48, 50) formée dans la face supérieure (52) du corps (18) de la tête d'entraînement (20) de manière à permettre une orientation du corps (18) de la tête d'entraînement (20) par rapport à l'axe (X-X) de l'arbre moteur (10) par pivotement du corps (18) de la tête d'entraînement (20) autour d'un second axe d'articulation.

6. Essuie-glace selon la revendication 5 caractérisé en ce que les crans parallèles (34) de la première surface crantée (32) du corps (18) de la tête d'entraînement (20) sont perpendiculaires à ceux (46) de la seconde surface crantée (44).

7. Essuie-glace selon l'une quelconque des revendications précédentes, caractérisé en ce qu'une cale de blocage (62) est interposée entre la face radiale de serrage (64) de l'écrou (66) et la face supérieure (52) du corps (18) de la tête d'entraînement (20), et en ce que la face inférieure (70) de la cale de blocage (62) est une face courbe dont la courbure correspond à celle de la face crantée de la rondelle d'orientation.

8. Essuie-glace selon la revendication 7 prise en combinaison avec l'une des revendications 5 ou 6, caractérisé en ce que la face inférieure (70) de la cale de blocage (62) est sphérique.

## Claims

1. A motor vehicle screen wiper of the type comprising a screen wiper arm, the drive head (18, 20) of which is fixed on the end portion (12) of a motor shaft (10) which is part of a screen wiper drive unit, and of the type in which the end portion (12) of the motor shaft (10) includes a frustoconical portion (14) which is received in a complementary through hole (26) associated with the drive head (20), and which is extended by a terminal shank (16) on which there is screwed a fastening nut (66), the radial thrust surface (64) of which cooperates with a portion, in facing relationship with it, of the upper face (52) of the drive head (20), the drive head comprising a first orientation ring (22) in which the frustoconical hole (26) is formed, and one face (28) of which has a set of ridges (30) which cooperate with the ridges (34) of a complementary first ridged engagement surface (32) which is fixed with respect to the body (18) of the drive head (20), through an oblong hole (36) of which there passes the end portion (12) of the motor shaft (10) whereby to allow the body (18) to be positioned with respect to the motor shaft, characterised in that the said complementary first engagement surface (32) is formed in facing relationship with the face (28) of the first orientation ring (22) on the body (18) of the drive head (20), the oblong form of the hole (36) and the disposition of the said ridges (30, 34) permitting the said positioning of the body (18) of the drive head (20) about a first positioning axis substantially at right angles to the axis (X-X) of the motor.

2. A screen wiper according to Claim 1, characterised in that the ridges (30, 34) are formed on a spherical surface in such a way as to enable the body (18) of the drive head (20) to be orientated with respect to the axis (X-X) of the motor shaft (10), about an axis parallel to the direction of the ridges and about an axis at right angles to the direction of the ridges, with one of these two axes constituting the said first positioning axis.

3. A screen wiper according to Claim 2, characterised in that the ridged face (28) of the orientation ring (22) includes two perpendicular sets of parallel ridges (30, 48).

4. A screen wiper according to any one of the preceding Claims, characterised in that the engagement surface (32) is formed in the lower face (24) of the body (18) of the drive head (20).

5. A screen wiper according to Claim 1, characterised in that the ridged face (28) of the first orientation ring is spherical, as is the complementary first engagement surface (32) which is formed in the lower face of the body (18) of the drive head (20), and in that it further includes a second orientation ring (42), which is interposed between the fastening nut (66) and the upper face (52) of the body (18) of the drive head (20), and of which a spherical face (44) includes a set of parallel ridges (46) which cooperate with a complementary spherical second ridged surface (48, 50) formed in the upper face (52) of the body (18) of the drive head (20), in such a way as to enable the body (18) of the drive head (20) to be orientated with respect to the axis (X-X) of the motor shaft (10) by pivoting of the body (18) of the drive head (20) about a second axis of articulation.

6. A screen wiper according to Claim 5, characterised in that the parallel ridges (34) on the first ridged surface (32) of the body (18) of the drive head (20) are at right angles to those (46) on the second ridged surface (44).

7. A screen wiper according to any one of the preceding Claims, characterised in that a stop member (62) is interposed between the radial thrust face (64) of the nut (66) and the upper face (52) of the body (18) of the drive head (20), and in that the lower face (70) of the stop member (62) is a curved face, the curvature of which corresponds to that of the ridged face of the orientation ring.

8. A screen wiper according to Claim 7 taken in combination with Claim 5 or Claim 6, characterised in that the lower face (70) of the stop member (62) is spherical.

## Patentansprüche

1. Kraftfahrzeugscheibenwischer, der einen Scheibenwischerarm umfaßt, dessen Antriebskopf (20) an dem Endabschnitt (12) einer Antriebswelle (10) befestigt ist, die zu einer Antriebseinheit des Scheibenwischers gehört, wobei der Endabschnitt (12) der Antriebswelle (10) ein kegelstumpfartiges Teilstück (14) umfaßt, das in eine formschlüssige durchgehende konische Bohrung (26) eingesetzt ist, die mit dem Antriebskopf (20) verbunden ist, und das durch ein Endstück (16) verlängert wird, an dem eine Klemmutter (66) aufgeschraubt ist, deren radiale Klemmfläche (64) mit einem gegenüberliegenden Abschnitt der Oberseite (52) des Antriebskopfes (20) zusammenwirkt, wobei der Antriebskopf eine erste Ausrichtungsscheibe (22) umfaßt, in die die kegelstumpfartige Bohrung (26) eingearbeitet ist und von der eine Fläche (28) eine Reihe von Rasten (30) enthält, die mit den Rasten (34) einer ersten formschlüssigen gerasteten Auflagefläche (32) zusammenwirken, die fest mit dem Körper (18) des Antriebskopfes (20) verbunden ist, der ein durchgehendes Langloch (36) enthält, durch das der Endabschnitt (12) der Antriebswelle (10) hindurchgeht, um eine Positionierung des Körpers (18) im Verhältnis zur Antriebswelle zu ermöglichen ,
**dadurch gekennzeichnet,** daß die besagte erste formschlüssige Auflagefläche (32) gegenüber der Fläche (28) der ersten Ausrichtungsscheibe (22) auf dem Körper (18) des Antriebskopfes (20) ausgebildet ist, wobei die längliche Form des Loches (36) und die Anordnung der besagten Rasten (30, 34) die besagte Positionierung des Körpers (18) des Antriebskopfes (20) um eine erste Positionierungsachse ermöglichen, die in etwa senkrecht zur Achse (X-X) der Antriebswelle verläuft.

2. Scheibenwischer nach Anspruch 1 , **dadurch gekennzeichnet,** daß die Rasten (30, 34) auf einer Kugelfläche ausgebildet sind, um eine Ausrichtung des Körpers (18) des Antriebskopfes (20) im Verhältnis zur Achse (X-X) der Antriebswelle (10) um eine zur Richtung der Rasten parallele Achse und um eine zur Richtung der Rasten senkrechte Achse zu ermöglichen, wobei eine dieser beiden Achsen die besagte erste Positionierungsachse bildet.

3. Scheibenwischer nach Anspruch 2 , **dadurch gekennzeichnet,** daß die gerastete Fläche (28) der Ausrichtungsscheibe (22) zwei senkrechte Reihen paralleler Rasten (30, 48) umfaßt.

4. Scheibenwischer nach einem der vorangehenden Ansprüche, **dadurch gekennzeichnet**, daß die Auflagefläche (22) in der Unterseite (24) des Körpers (18) des Antriebskopfes (20) ausgebildet ist.

5. Scheibenwischer nach Anspruch 1 , **dadurch gekennzeichnet,** daß die gerastete Fläche (28) der ersten Ausrichtungsscheibe kugelförmig ebenso wie die formschlüssige erste Auflagefläche (32) ist, die in der Unterseite des Körpers (18) des Antriebskopfes (20) ausgebildet ist, und daß er außerdem eine zweite Ausrichtungsscheibe (42) umfaßt, die zwischen der Klemmutter (66) und der Oberseite (52) des Körpers (18) des Antriebskopfes (20) eingefügt ist und von der eine Kugelfläche (44) eine Reihe paralleler Rasten (46) enthält, die mit einer formschlüssigen zweiten gerasteten Kugelfläche (48, 50) zusammenwirken, die in der Oberseite (52) des Körpers (18) des Antriebskopfes (20) ausgebildet ist, um eine Ausrichtung des Körpers (18) des Antriebskopfes (20) im Verhältnis zur Achse (X-X) der Antriebswelle (10) durch Schwenkung des Körpers (18) des Antriebskopfes (20) um eine zweite Gelenkachse zu ermöglichen.

6. Scheibenwischer nach Anspruch 5 , **dadurch gekennzeichnet,** daß die parallelen Rasten (34) der ersten gerasteten Fläche (32) des Körpers (18) des Antriebskopfes (20) senkrecht zu denen (46) der zweiten gerasteten Fläche (44) verlaufen.

7. Scheibenwischer nach einem der vorangehenden Ansprüche, **dadurch gekennzeichnet**, daß ein Sicherungskeil (62) zwischen der radialen Klemmfläche (64) der Mutter (66) und der Oberseite (52) des Körpers (18) des Antriebskopfes (20) eingefügt ist, und daß die Unterseite (70) des Sicherungskeils (62) eine gekrümmte Fläche ist, deren Krümmung derjenigen der gerasteten Fläche der Ausrichtungsscheibe entspricht.

8. Scheibenwischer nach Anspruch 7 in Kombination mit einem der Ansprüche 5 oder 6 , **dadurch gekennzeichnet,** daß die Unterseite (70) des Sicherungskeils (62) kugelförmig ausgebildet ist.
